# NEUE EUROPÄISCHE PATENTSCHRIFT

(11) **EP 2 852 507 B2**
(45) Veröffentlichungstag und Bekanntmachung des Hinweises auf die Entscheidung über den Einspruch: **26.01.2022**
(45) Hinweis auf die Patenterteilung: 11.07.2018
(21) Anmeldenummer: 13705116.5
(22) Anmeldetag: 01.02.2013
(51) Int. Cl.: B60L 9/00, H01F 38/14

(54) **VORRICHTUNG ZUR INDUKTIVEN ÜBERTRAGUNG ELEKTRISCHER ENERGIE**
DEVICE FOR INDUCTIVE TRANSFER OF ELECTRICAL ENERGY
DISPOSITIF DE TRANSMISSION D'ÉNERGIE ÉLECTRIQUE PAR COUPLAGE INDUCTIF

(30) Priorität: 21.05.2012 DE 102012104372
(43) Veröffentlichungstag der Anmeldung: 01.04.2015
(73) Patentinhaber: Conductix-Wampfler GmbH, 79576 Weil am Rhein (DE)
(72) Erfinder: WECHLIN, Mathias, 79400 Kandern (DE)
(74) Vertreter: Charrier Rapp & Liebau
(86) Internationale Anmeldenummer: PCT/EP2013/052019
(87) Internationale Veröffentlichungsnummer: WO 2013/174527

(56) Entgegenhaltungen:
- EP-A1- 0 357 829
- EP-A2- 1 293 996
- WO-A1-98/27561
- WO-A1-2008/106818
- DE-A1- 10 323 357
- DE-A1-102009 057 437
- FR-A1- 2 732 169
- FR-A1- 2 765 735
- FR-A3- 2 695 285
- US-A1- 2012 119 699

## Beschreibung

Die Erfindung betrifft eine Vorrichtung zur induktiven Übertragung elektrischer Energie nach dem Oberbegriff des Anspruchs 1.

Eine gattungsgemäße Vorrichtung offenbaren die DE 697 24 995 T2 und die WO 98/27561 A1 in Form eines elektrischen Stromversorgungssystems, dass eine tragbare Steckdoseneinheit mit einer Steckdose und einer mit dieser verbundenen Sekundärspule aufweist. Um die tragbare Einheit über die Sekundärspule mit elektrischer Energie versorgen zu können, ist in der Fahrbahn eine Sockeleinheit ortsfest in einen Sickerschacht versenkt. Die Sockeleinheit weist eine Primärspule zur induktiven Übertragung elektrischer Energie auf die Sekundärspule der tragbaren Steckdoseneinheit sowie eine die Primärspule mit elektrischer Energie versorgende Elektronik auf. Die Primärspule und die Elektronik sind in einem gegen Wassereintritt gekapselten Gehäuse untergebracht. Die Elektronik ist über Netzspeiseleitung, die eine im Gehäuse vorgesehene Durchführung durchgeführt ist, mit dem Stromversorgungsnetz verbunden. Um ein Eindringen von Wasser durch die Durchführung in den Innenraum des Gehäuses zu verhindern, ist die Durchführung speziell abgedichtet.

Die oben beschriebene Sockeleinheit weist den Nachteil auf, dass die Dichtung der Durchführung ein mögliches Leck darstellt, beispielsweise wenn die Dichtung durch Erschütterungen oder durch Kleinst- und Kleintiere im Erdreich beschädigt wird. Auch lässt die Dichtwirkung der Dichtung nach einer bestimmten Zeit nach, beispielsweise kann das Dichtmaterial im Lauf der Zeit porös werden, so dass auch hier die Gefahr besteht, dass Wasser eindringt. Um dies möglichst zu vermeiden, muss die Dichtung regelmäßig kontrolliert werden, was nur mit großem Aufwand möglich ist. Denn hierzu muss der Deckel des Gehäuses abgenommen werden, und dann müssen die schwere Spule und die empfindliche Elektronik herausgenommen werden. Erst dann ist die Durchführung so weit freigelegt, dass ihre Dichtigkeit überprüft werden kann. Ist die Dichtung undicht geworden, so muss das Erdreich oberhalb der Dichtung aufgegraben werden, um die Dichtung von der Außenseite des Gehäuses austauschen zu können.

Im Bereich der induktiven Energieübertragung zu beweglichen Verbrauchern, beispielsweise Elektrofahrzeugen wie Automobile oder Lastwagen, kommt noch erschwerend hinzu, dass der Bereich um die im Boden versenkte Primärspule durch die regelmäßig darauf fahrenden Fahrzeuge oft erschüttert wird, so dass die Dichtung zusätzlich beansprucht wird.

Die GB 2477080 A offenbart eine Gleisspur für spurgebundenen Fahrzeuge mit einem vorgefertigten Gleismodul, bei dem zwischen zwei Fahrschienen die Kabel einer sich in Längsrichtung der Fahrschienen erstreckenden Primärspule eingelegt werden. Seitlich neben den Fahrschienen sind elektrische oder elektronische Komponenten in einem Hohlraum angeordnet. Vom Hohlraum aus verläuft ein Durchgangsloch in den Bereich zwischen den Schienen, wobei durch das Durchgangsloch Leitungen zum Verbinden der Kabel mit den elektrischen oder elektronischen Komponenten führen. Da der Boden zwischen den Fahrschienen oberhalb des Bodens des Hohlraums liegt und die elektrischen oder elektronischen Komponenten auf dem Boden des Hohlraums angeordnet sind, würde sich in den Hohlraum oder den Bereich zwischen den Fahrschienen eindringendes Wasser im tiefer liegenden Hohlraum sammeln. Um die elektrischen oder elektronischen Komponenten vor Wasser zu schützen, müssen diese Komponenten deshalb entsprechend wasserdicht abgedichtet werden. Die ist mit relativ großem Aufwand verbunden, da die von den Komponenten abgehenden Leitungen speziell abgedichtet werden müssen.

Die DE 10 2009 057 437 A1 offenbart eine Anordnung zum induktiven Beladen eines Energiespeichers Fahrzeugs und eine Ladestation, wobei eine elektronische Schaltung im Inneren einer Haube vorgesehen ist, deren Öffnung an der Unterseite der Haube angeordnet ist. Dabei ist die Haube luftdicht an einem Deckel der Ladestation angebracht, was fertigungstechnisch aufwendig eine zusätzliche Abdichtung zwischen Haube und Deckel erfordert und die regelmäßige Wartung und Prüfung der Dichtigkeit zwischen Deckel und Haube erfordert.

Aufgabe der vorliegenden Erfindung ist es, die oben genannten Nachteile zu überwinden und eine eingangs genannte Vorrichtung zur induktiven Übertragung elektrischer Energie bereitzustellen, welche wartungsfreundlich, zuverlässig, betriebssicher und gegen Eindringen von Wasser in die empfindliche Elektronik geschützt ist.

Diese Aufgabe löst die Erfindung mit einer Vorrichtung zur induktiven Übertragung elektrischer Energie mit den Merkmalen des Anspruchs 1. Vorteilhafte Ausgestaltungen und zweckmäßige Weiterbildungen der Erfindung sind in den Unteransprüchen angegeben.

Erfindungsgemäß ist die eingangs genannte Vorrichtung zur induktiven Übertragung elektrischer Energie, bei der die Versorgungseinheit auf einer im eingebauten Zustand der Fahrbahn abgewandten Seite der Spule in einem nach oben und seitlich geschlossenen Gehäuse mit einer nach unten offenen Gehäuseöffnung angeordnet ist dadurch gekennzeichnet, dass eine Entlüftungsvorrichtung außerhalb des Gehäuses zur Entlüftung eines Innenraums der Vorrichtung vorgesehen ist, wozu die Spuleneinheit ein Einwegventil aufweist, um Luft aus dem Innenraum außerhalb des Gehäuses ablassen und bei vollständig vollgelaufener Vorrichtung und ständig weiter nachdrückendem und nachlaufendem Wasser das Wasser aus dem Innenraum ablaufen lassen zu können. Hierdurch kann nach dem Prinzip der Taucherglocke das Wasser nur soweit in Gehäuse eindringen, bis der Wasserdruck und der Druck der im Gehäuse eingeschlossenen Luft bzw. ggf. auch eines anderen gasförmigen Fluids im Gleichgewicht sind. Wird hier und nachfolgend von Wasser gesprochen, so sind damit auch andere Flüssigkeiten gemeint. Somit kann entgegen der Auffassung der Fachwelt unter Verzicht auf zusätzliche und aufwändige Dichtungsmaßnahmen ein Eindringen von Wasser oder anderen Flüssigkeiten zuverlässig verhindert werden.

In einer vorteilhaften Fortbildung der Erfindung kann die Versorgungseinheit in Höhenrichtung in einem Sicherheitsabstand oberhalb der Gehäuseöffnung im Gehäuse angeordnet sein, wobei vorteilhaft der Sicherheitsabstand mindestens halb so hoch, bevorzugt mehr als halb so hoch wie ein Abstand zwischen der Gehäuseöffnung und einem der Gehäuseöffnung gegenüberliegenden oberen Gehäusedeckel des Gehäuses ist. Somit wird sichergestellt, dass die Luft im Gehäuse ausreicht, um dem Wasserdruck des eindringenden Wassers standzuhalten.

Bevorzugt kann sich eine seitliche Gehäusewand des Gehäuses zumindest abschnittsweise zur Gehäuseöffnung hin verengt, wodurch ein Pegel von eindringendem Wasser zunehmend langsamer ansteigt, da sich der Raum des Gehäuses mit der Höhe zunehmend vergrößert. Bevorzugt kann in alternativen Fortbildungen das Gehäuse die Form eines einseitig geschlossenen Hohlkegelabschnitts haben, wobei die kleinere Seite des Hohlkegels die Gehäuseöffnung bildet, oder das Gehäuse die Form eines einseitig geschlossenen Hohlzylinders haben. Auch sind andere Formen denkbar, beispielsweise kann das Gehäuse im Querschnitt eckige Form aufweisen, beispielsweise, quadratisch, rechteckig, sechseckig, achteckig oder mehreckig, bevorzugt rechteckig.

Vorteilhaft kann das Gehäuse aus einem elektrisch leitenden Material bestehen, um die in der Versorgungseinheit enthaltene Elektronik gegen das starke Magnetfeld der Primärspule abzuschirmen.

Weiter kann das Gehäuse vorteilhaft aus einem nicht korrodierenden Material bestehen, so dass das Gehäuse einfach herstellbar, leicht vom Gewicht und gegen Korrosion geschützt ist. Bevorzugt kann hierzu Hartes Kunststoffmaterial verwendet werden.

Bevorzugt kann die Versorgungseinheit an einem der Gehäuseöffnung gegenüberliegenden oberen Gehäusedeckel des Gehäuses angeordnet sein, wodurch sich die Befestigung der Versorgungseinheit am Gehäuse weiter vereinfacht.

In einer fertigungstechnisch und für die Montage vor Ort vorteilhaften Ausführung ist die Spule erfindungsgemäß in einer Spuleneinheit integriert, insbesondere in Beton oder Stahlbeton vergossen. Weiter kann das Gehäuse an einer der Fahrbahn abgewandten Unterseite der Spuleneinheit befestigt sein, so dass ein ausreichender Abstand der in der Versorgungseinheit enthaltenen Elektronik von der Spule vorhanden ist. Erfindungsgemäß weist die Vorrichtung ein Schachtmodul mit einem durch einen Schachtboden und eine umlaufende Schachtwand definierten, zur Fahrbahn hin offenen Innenraum auf, welches bereits vorgefertigt hergestellt und am Montageort lediglich in eine entsprechende Öffnung im Erdreich versenkt werden kann. Um den Innenraum des Schachtmoduls einfach und schnell verschließen zu können, wird erfindungsgemäß die Spuleneinheit verwendet. Weiter vorteilhaft kann hierzu die Schachtwand an ihrem oberen Ende einen zum Innenraum weisenden umlaufenden Vorsprung aufweisen, auf den die Spuleneinheit aufgesetzt werden kann. Bevorzugt können eine Fahrbahnseite der Spuleneinheit und das obere Ende der Schachtwand bündig miteinander und im eingebrauten Zustand mit der Fahrbahn abschließen, um eine möglichst schwellenfreie Fahrbahn bereitstellen zu können.

### gestrichen

Nachfolgend wird ein Ausführungsbeispiel der Erfindung detailliert anhand der beigefügten Zeichnungen beschrieben. Diese zeigen
- **Fig. 1**: eine schematische Seitenansicht durch eine erfindungsgemäße Vorrichtung zur induktiven Übertragung elektrischer Energie im Normalbetriebszustand;
- **Fig. 2**: die Ansicht aus Fig. 1 mit etwas in die Vorrichtung eingedrungenem Wasser;
- **Fig. 3**: die Ansicht aus Fig. 1 mit mehr in die Vorrichtung eingedrungenem Wasser;
- **Fig. 4**: die Ansicht aus Fig. 1 mit einer großen Menge von in die Vorrichtung eingedrungenem Wasser.
- **Fig. 5**: eine alternative Gehäuseform eines Gehäuses der erfindungsgemäßen Vorrichtung aus Fig. 1.
- **Fig. 6**: eine weitere alternative Gehäuseform eines Gehäuses der erfindungsgemäßen Vorrichtung aus Fig. 1.

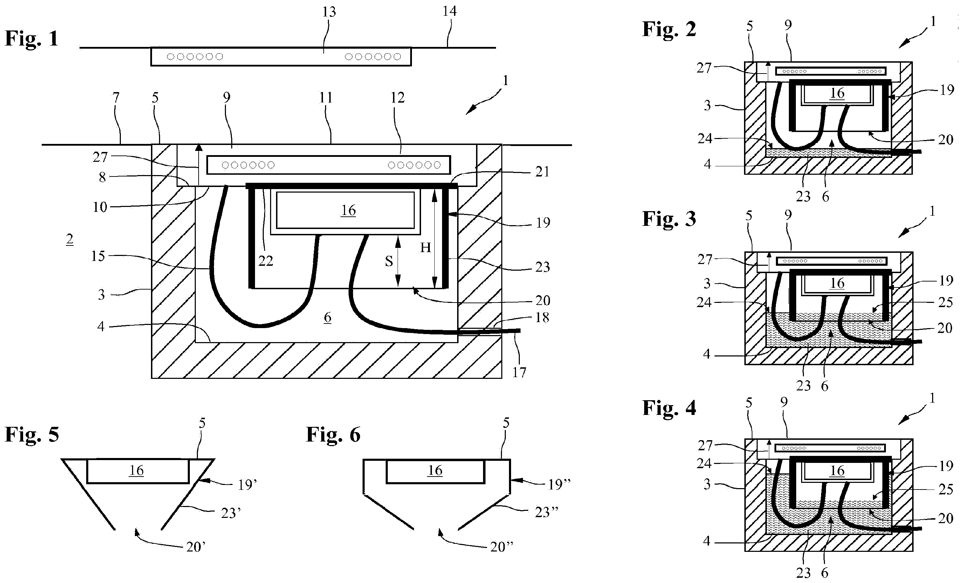

Fig. 1 zeigt eine erfindungsgemäße Vorrichtung 1 zur induktiven Übertragung elektrischer Energie. Die Vorrichtung 1 weist ein vollständig in das Erdreich 2 versenktes, aus Stahlbeton vorgefertigtes Schachtmodul 3 mit einem durch einen Schachtboden 4 und eine umlaufende Schachtwand 5 definierten Innenraum 6 auf, der zu einer Fahrbahn 7 hin zunächst offen ist. An ihrem oberen Ende weist die Schachtwand 5 einen zum Innenraum 6 weisenden umlaufenden Vorsprung 8 auf.

Auf den Vorsprung 8 ist eine Spuleneinheit 9 mit einem Randbereich ihrer Unterseite 10 aufgesetzt und lösbar mit der Schachtwand 5 verbunden. Die Spuleneinheit 9 verschließt dadurch den Innenraum 6 zur Fahrbahn 7 hin. Eine Fahrbahnseite 11 der Spuleneinheit 9 und das obere Ende der Schachtwand 5 schließen bündig mit der Fahrbahn 7 ab.

In die Spuleneinheit 5 ist in an sich bekannter Weise eine Primärspule 12 zur induktiven Übertragung elektrischer Energie zu einer Sekundärspule 13 eines Elektrofahrzeugs 14 integriert. Die Primärspule 12 wird über ein Versorgungskabel 15 von einer an sich bekannten elektrischen Versorgungseinheit 16 mit elektrischer Energie versorgt.

Die Versorgungseinheit 16 enthält einen Umrichter zur Bereitstellung der hohen Spannungen und Ströme für die Energieübertragung von Primärspule 12 zur Sekundärspule 13 und eine Ansteuerelektronik zur Ansteuerung des Umrichters. Die Versorgungseinheit 16 selbst wird über ein Netzkabel 17 an das lokale Energieversorgungsnetz angeschlossen. Hierzu ist das Netzkabel 17 durch eine in der Schachtwand 5 vorgesehene Kabeldurchführung 18 geführt. Um ein Eindringen von Wasser durch die Kabeldurchführung 18 in den Innenraum 6 zu verhindern, ist die Kabeldurchführung 18 mit einer nicht gezeichneten Dichtung versehen.

Wie einleitend dargelegt, besteht bei solchen Dichtungen jedoch immer die Gefahr, dass die Dichtung aus unterschiedlichsten Gründen versagt oder die Dichtwirkung so stark nachlässt, dass Wasser in den Innenraum 6 eindringt.

Um beim Eindringen von Wasser dennoch einen sicheren und zuverlässigen Betrieb der Vorrichtung 1 zu gewährleisten und insbesondere die feuchtigkeitsempfindliche Versorgungseinheit 16 gegenüber Wasser zu schützen, sieht die Erfindung vor, die Versorgungseinheit 16 in einem topfförmigen Gehäuse 19 mit nach unten weisender Gehäuseöffnung 20 an der Spuleneinheit 9 anzubringen.

Dabei ist das Gehäuse 19 mit einem Gehäusedeckel 21 an der Unterseite 10 der Spuleneinheit 9 befestigt, und an einer Deckelunterseite 22 des Gehäuses 19 ist wiederum die Versorgungseinheit 16 befestigt. Vom Gehäusedeckel 21 erstreckt sich eine umlaufende Gehäusewand 23 zum Schachtboden 4 hinunter, wobei die Gehäusewand 23 noch soweit vom Schachtboden 4 beabstandet ist, dass ein Durchgang für das Versorgungskabel 15 und das Netzkabel 17 verbleibt. Die Gehäusewand 23 ist dabei deutlich höher als die Versorgungseinheit 16. Somit besteht stets ein Sicherheitsabstand S zwischen Gehäuseöffnung 20 und einer Unterseite der Versorgungseinheit 16. Vorliegend ist die Gehäusewand 23 etwas mehr als doppelt so hoch wie die Versorgungseinheit 16, so dass ein Abstand H zwischen Gehäuseöffnung 20 und Gehäusedeckel 21 etwa doppelt so groß wie der Sicherheitsabstand S ist.

Um die in der Versorgungseinheit 16 enthaltene Elektronik gegen das starke Magnetfeld der Primärspule 12 abzuschirmen, kann das Gehäuse 19 bevorzugt aus einem elektrisch gut leitenden Material bestehen, beispielsweise Aluminium.

Wie aus Fig. 2 bis 4 hervorgeht, macht sich die Erfindung zum Schutz der Versorgungseinheit 16 und ihrer besonders feuchtigkeitsempfindlichen elektrischen und elektronischen Komponenten das sogenannte Taucherglocken-Prinzip zu nutze.

Denn das nach oben hin luft- und wasserdichte Gehäuse 19 verhindert, dass in den Innenraum 6 eindringendes Wasser im Gehäuse 19 bis zur Versorgungseinheit 16 hoch steigt.

Dringt Wasser 24 in den Innenraum 6 ein, so bildet sich zunächst ein Wasserpegel 25 aus, wie in Fig. 2 gezeigt. Steigt das Wasser 24 weiter, so gelangt es nach und nach bis zur Gehäuseöffnung 20 des Gehäuses 19, wobei zumindest am Anfang der Wasserpegel 25 außerhalb des Gehäuses 19 einem Wasserpegel 26 im Gehäuse 19 entspricht, wie in Fig. 3 gezeigt. Steigt das Wasser 24 noch weiter, so kann durch die im luft- und wasserdichten Gehäuse 19 vorhandene Luft das Wasser 24 im Gehäuse 19 nicht mehr so stark ansteigen wie im außerhalb des Gehäuses 19, so dass der Wasserpegel 26 im Gehäuse 19 niedriger bleibt als der Wasserpegel 25 im Innenraum 6 außerhalb des Gehäuses 19. Sobald sich ein Gleichgewicht zwischen dem Druck der komprimierten Luft im Gehäuse 19 und dem Druck des im Schachtmodul 3 befindlichen Wassers 24 eingestellt hat, steigt der Wasserpegel 26 im Gehäuse nicht mehr weiter an, wie in Fig. 4 gezeigt. Somit kann, selbst wenn der ganze Innenraum 6 mit Wasser 24 volläuft, das Wasser 24 nicht bis zur Versorgungseinheit 16 hochsteigen.

Im Bereich außerhalb des Gehäuses 19 ist eine Entlüftungsvorrichtung vorgesehen, durch welche die bei steigendem Wasserpegel 25 außerhalb des Gehäuses die vom Wasser 24 verdrängte Luft aus dem Innenraum 6 entweichen kann. Hierzu weist die Spuleneinheit 9 ein Einwegventil 27 auf, welches Luft und ggf. auch Wasser 24 aus dem Innenraum 6 entweichen lässt, in umgekehrter Richtung aber keine Luft und Wasser in den Innenraum 6 durchlässt. Auch kann eine nicht gezeichnete, verschließbare Absaugöffnung in der Vorrichtung 1 vorgesehen werden, um im Innenraum 6 des Schachtmoduls 3 vorhandenes Wasser einfach von außen absaugen zu können. Beispielsweise kann in der Spuleneinheit 9 ein über dem Innenraum 6 außerhalb des Gehäusedeckels 21 liegendes verschließbares Rundloch vorgesehen werden, durch dass ein Schlauch in den Innenraum gesteckt werden kann.

Fig. 5 zeigt die erfindungsgemäße Vorrichtung aus Fig. 1 mit einem Gehäuse 19' mit einer weiteren alternativen Gehäuseform. Gleiche Teile wie bei der in Fig. 1 gezeigten Ausführung werden mit den gleichen Bezeichnungen benannt und mit den gleichen Bezugszeichen bezeichnet. Eine Gehäusewand 23' verengt sich bereits vom Gehäusedeckel 21 an zur Gehäuseöffnung 20' hin, so dass sich die Gehäusewand 23' zur Gehäuseöffnung 20' hin stetig verengt. Hierdurch steigt der Pegel 25 von eindringendem Wasser 23 zunehmend langsamer an, da sich der Raum des Gehäuses 19" mit der Höhe zunehmend vergrößert.

In Fig. 6 ist die erfindungsgemäße Vorrichtung aus Fig. 1 mit einem Gehäuse 19" mit einer weiteren alternativen Gehäuseform gezeigt. Gleiche Teile wie bei der in Fig. 1 gezeigten Ausführung werden mit den gleichen Bezeichnungen benannt und mit den gleichen Bezugszeichen bezeichnet. Eine Gehäusewand 23" verläuft zunächst senkrecht vom Gehäusedeckel 21 in Richtung einer Gehäuseöffnung 20" und knickt dann etwa bei der Hälfte des Abstands H nach innen ab, so dass sich die Gehäusewand 23" zur Gehäuseöffnung 20" hin verengt. Hierdurch steigt der Pegel 25 von eindringendem Wasser 23 zunehmend langsamer an, da sich der Raum des Gehäuses 19" mit der Höhe zunehmend vergrößert. Gegenüber dem in Fig. 5 gezeigten Gehäuse 19' weist das Gehäuse 19" nach Fig. noch den Vorteil auf, dass auch eine breitere Versorgungseinheit 16 verwendet werden kann.

Durch die oben beschriebene Ausbildung wird in für den Fachmann ganz unerwarteter Weise das Eindringen von Wasser 24 in die Versorgungseinheit 16 verhindert. Denn üblicherweise werden große Anstrengungen unternommen, um die empfindlichen elektrischen und elektronischen Teile einer Vorsorgungseinheit möglichst gut gegen das Eindringen von Wasser oder anderen Flüssigkeiten einzukapseln und Gehäuse, die die Vorsorgungseinheit 16 umgeben, möglichst gut abzudichten. Im Gegensatz dazu kann bei der Erfindung weitgehend auf eine möglichst dichte Kapselung der Versorgungseinheit 16 verzichtet werden. Dies steht in deutlichem Widerspruch zur sonst herrschenden Meinung in der Fachwelt.

### Bezugszeichen

- 1: Vorrichtung zur induktiven Übertragung elektrischer Energie
- 2: Erdreich
- 3: Schachtmodul
- 4: Schachtboden
- 5: Schachtwand
- 6: Innenraum
- 7: Fahrbahn
- 8: Vorsprung
- 9: Spuleneinheit
- 10: Unterseite der Spuleneinheit
- 11: Fahrbahnseite der Spuleneinheit
- 12: Primärspule
- 13: Sekundärspule
- 14: Elektrofahrzeug
- 15: Versorgungskabel
- 16: Versorgungseinheit
- 17: Netzkabel
- 18: Kabeldurchführung
- 19: Gehäuse
- 19': Gehäuse mit alternativer Gehäuseform
- 19": Gehäuse mit weiterer alternativer Gehäuseform
- 20: Gehäuseöffnung
- 20': Gehäuseöffnung der alternativen Gehäuseform
- 20": Gehäuseöffnung der weiteren alternativen Gehäuseform
- 21: Gehäusedeckel
- 22: Deckelunterseite
- 23: Gehäusewand
- 23': Gehäusewand der alternativen Gehäuseform
- 23": Gehäusewand der weiteren alternativen Gehäuseform
- 24: Wasser
- 25: Wasserpegel
- 26: Wasserpegel im Gehäuse
- 27: Entlüftungsventil
- H: Abstand Deckelunterseite - Gehäuseöffnung
- S: Sicherheitsabstand

## Patentansprüche

1. Vorrichtung (1) zur induktiven Übertragung elektrischer Energie zwischen einer ortsfest in einer Fahrbahn (7) installierbaren Spule (12) und einer Sekundärspule (13) eines beweglichen elektrischen Verbrauchers, insbesondere eines Elektrofahrzeugs (14), wobei die Vorrichtung (1) ein Schachtmodul (3) mit einem durch einen Schachtboden (4) und eine umlaufende Schachtwand (5) definierten, zur Fahrbahn (7) hin offenen Innenraum (6) aufweist, wobei der Innenraum (6) des Schachtmoduls (3) durch eine Spuleneinheit (9) verschlossen ist, wobei die Spule (12) in der Spuleneinheit (9) integriert ist, wobei die Vorrichtung (1) ferner die Spule (12) und eine der Spule (12) zugeordnete Versorgungseinheit (16) zur Versorgung mit elektrischer Energie aufweist, und wobei die Versorgungseinheit (16) auf einer im eingebauten Zustand der Fahrbahn (7) abgewandten Seite der Spule (12) in einem nach oben und seitlich geschlossenen Gehäuse (19) der Vorrichtung (1) mit einer nach unten offenen Gehäuseöffnung (20) angeordnet ist, **dadurch gekennzeichnet, dass** die Vorrichtung (1) zur Entlüftung des Innenraums (6) eine Entlüftungsvorrichtung (27) außerhalb des Gehäuses (19) enthält, wozu die Spuleneinheit (9) ein Einwegventil (27) aufweist.

2. Vorrichtung (1) nach Anspruch 1, **dadurch gekennzeichnet, dass** die Versorgungseinheit (16) in Höhenrichtung (Z) in einem Sicherheitsabstand (S) oberhalb der Gehäuseöffnung (20) im Gehäuse (19) angeordnet ist.

3. Vorrichtung (1) nach Anspruch 2, **dadurch gekennzeichnet, dass** der Sicherheitsabstand (S) mindestens halb so hoch, bevorzugt mehr als halb so hoch wie ein Abstand (H) zwischen der Gehäuseöffnung (20) und einem der Gehäuseöffnung (20) gegenüberliegenden oberen Gehäusedeckel (21) des Gehäuses (19) ist.

4. Vorrichtung (1) nach einem der Ansprüche 1 bis 3, **dadurch gekennzeichnet, dass** sich eine seitliche Gehäusewand (23'; 23") des Gehäuses (19'; 19") zumindest abschnittsweise zur Gehäuseöffnung (20'; 20") hin verengt.

5. Vorrichtung (1) nach einem der Ansprüche 1 bis 4, **dadurch gekennzeichnet, dass** das Gehäuse (19') die Form eines einseitig geschlossenen Hohlkegelabschnitts hat, wobei die kleinere Seite des Hohlkegels die Gehäuseöffnung (20') bildet.

6. Vorrichtung (1) nach einem der Ansprüche 1 bis 3, **dadurch gekennzeichnet, dass** das Gehäuse (19) die Form eines einseitig geschlossenen Hohlzylinders hat.

7. Vorrichtung (1) nach einem der voranstehenden Ansprüche, **dadurch gekennzeichnet, dass** das Gehäuse (19) aus einem elektrisch leitenden Material und/oder einem nicht korrodierenden Material besteht.

8. Vorrichtung (1) nach einem der voranstehenden Ansprüche, **dadurch gekennzeichnet, dass** die Vorrichtung (1) zur Entwässerung des Innenraums (6) eine Absaugöffnung außerhalb des Gehäuses (19) enthält.

9. Vorrichtung (1) nach einem der voranstehenden Ansprüche, **dadurch gekennzeichnet, dass** die Versorgungseinheit (16) an einem der Gehäuseöffnung (20) gegenüberliegenden oberen Gehäusedeckel (21) des Gehäuses (19) angeordnet ist.

10. Vorrichtung (1) nach einem der voranstehenden Ansprüche , **dadurch gekennzeichnet, dass** das Gehäuse (19) an einer der Fahrbahn (7) abgewandten Unterseite (10) der Spuleneinheit (9) befestigt ist.

11. Vorrichtung (1) nach einem der voranstehenden Ansprüche, **dadurch gekennzeichnet, dass** die Schachtwand (5) an ihrem oberen Ende einen zum Innenraum (6) weisenden umlaufenden Vorsprung (8) aufweist.

12. Vorrichtung (1) nach einem der voranstehenden Ansprüche, **dadurch gekennzeichnet, dass** eine Fahrbahnseite (11) der Spuleneinheit (9) und das obere Ende der Schachtwand (5) bündig miteinander abschließen.

## Claims

1. Device (1) for inductive transfer of electrical energy between a coil (12) which can be installed to be fixed in a track (7) and a secondary coil (13) of a movable electrical consuming device, in particular an electric vehicle (14), wherein the device (1) has a shaft module (3) with an interior space (6) which is open towards the track (7) and defined by a shaft base (4) and a surrounding shaft wall (5), wherein the interior space (6) of the shaft module (3) is closed by a coil unit (9), wherein the coil (12) is integrated in the coil unit (9), wherein the device (1) further has the coil (12) and a supply unit (16) assigned to the coil (12) for supplying with electrical energy, and wherein the supply unit (16) is arranged on a side of the coil (12) facing away from the track (7) in the installed state in a housing (19) of the device (1) which is closed at the top and laterally with a housing opening (20) which is open at the bottom, **characterised in that** the device (1) for ventilating the interior space (6) contains a ventilation device (27) outside of the housing (19), for which the coil unit (9) has a one-way valve (27).

2. Device (1) according to claim 1, **characterised in that** the supply unit (16) is arranged in height direction (Z) at a safe distance (S) above the housing opening (20) in the housing (19).

3. Device (1) according to claim 2, **characterised in that** the safe distance (S) is at least half as high, preferably more than half as high as a distance (H) between the housing opening (20) and an upper housing cover (21) of the housing (19) opposite the housing opening (20).

4. Device (1) according to one of claims 1 to 3, **characterised in** the a lateral housing wall (23'; 23") of the housing (19'; 19") is narrowed at least in sections towards the housing opening (20'; 20").

5. Device (1) according to one of claims 1 to 4, **characterised in that** the housing (19') has the shape of a hollow cone section which is closed on one side, wherein the smaller side of the hollow cone forms the housing opening (20').

6. Device (1) according to one of claims 1 to 3, **characterised in that** the housing (19) has the shape of a hollow cylinder which is closed on one side.

7. Device (1) according to one of the preceding claims, **characterised in that** the housing (19) consists of an electrically conductive material and/or a non-corroding material.

8. Device (1) according to one of the preceding claims, **characterised in that** the device (1) contains an exhaust opening outside of the housing (19) for removing water from the interior space (6).

9. Device (1) according to one of the preceding claims, **characterised in that** the supply unit (16) is arranged on an upper housing cover (21) of the housing (19) opposite the housing opening (20).

10. Device (1) according to one of the preceding claims, **characterised in that** the housing (19) is attached to an underside (10) of the coil unit (9) facing away from the track (7).

11. Device (1) according to one of the preceding claims, **characterised in that** the shaft wall (5) has at its upper end a surrounding projection (8) pointing to the interior space (6).

12. Device (1) according to one of the preceding claims, **characterised in that** one track side (11) of the coil unit (9) and the upper end of the shaft wall (5) terminate flush with one another.

## Revendications

1. Dispositif (1) de transmission d'énergie électrique par couplage inductif entre une bobine (12) pouvant être installée de manière fixe dans une voie de circulation (7) et une bobine secondaire (13) d'un consommateur électrique mobile, en particulier d'un véhicule électrique (14), dans lequel le dispositif (1) présente un module de gaine (3) avec un espace intérieur (6) ouvert vers la voie de circulation (7), défini par un fond de gaine (4) et une paroi de gaine périphérique (5), dans lequel l'espace intérieur (6) du module de gaine (3) est fermé par une unité de bobine (9), dans lequel la bobine (12) est intégrée dans l'unité de bobine (9), dans lequel le dispositif (1) présente en outre la bobine (12) et une unité d'alimentation (16) associée à la bobine (12) pour l'alimentation en énergie électrique, et dans lequel l'unité d'alimentation (16) est agencée sur un côté de la bobine (12) opposé à la voie de circulation (7) à l'état monté dans un boîtier (19) du dispositif (1) fermé vers le haut et le côté avec une ouverture de boîtier (20) ouverte vers le bas, **caractérisé en ce que** le dispositif (1) de désaérage de l'espace intérieur (6) contient un dispositif de désaérage (27) à l'extérieur du boîtier (19), ce pour quoi l'unité de bobine (9) présente une soupape à une voie (27).

2. Dispositif (1) selon la revendication 1, **caractérisé en ce que** l'unité d'alimentation (16) est agencée en direction de la hauteur (Z) à une distance de sécurité (S) au-dessus de l'ouverture de boîtier (20) dans le boîtier (19).

3. Dispositif (1) selon la revendication 2, **caractérisé en ce que** la distance de sécurité (S) est au moins égale à la moitié, de préférence plus de la moitié d'une distance (H) entre l'ouverture de boîtier (20) et un couvercle de boîtier (21) du boîtier (19) supérieur faisant face à l'ouverture de boîtier (20).

4. Dispositif (1) selon l'une quelconque des revendications 1 à 3, **caractérisé en ce qu'**une paroi de boîtier latérale (23' ; 23'') du boîtier (19' ; 19'') se rétrécit au moins par section vers l'ouverture de boîtier (20' ; 20").

5. Dispositif (1) selon l'une quelconque des revendications 1 à 4, **caractérisé en ce que** le boîtier (19') a la forme d'une section de cône creux fermée d'un côté, dans lequel le plus petit côté du cône creux forme l'ouverture de boîtier (20').

6. Dispositif (1) selon l'une quelconque des revendications 1 à 3, **caractérisé en ce que** le boîtier (19) a la forme d'un cylindre creux fermé d'un côté.

7. Dispositif (1) selon l'une quelconque des revendications précédentes, **caractérisé en ce que** le boîtier (19) se compose d'un matériau électriquement conducteur et/ou d'un matériau non corrosif.

8. Dispositif (1) selon l'une quelconque des revendications précédentes, **caractérisé en ce que** le dispositif (1) d'évacuation de l'espace intérieur (6) contient une ouverture d'aspiration à l'extérieur du boîtier (19).

9. Dispositif (1) selon l'une quelconque des revendications précédentes, **caractérisé en ce que** l'unité d'alimentation (16) est agencée au niveau d'un couvercle de boîtier (21) du boîtier (19) supérieur faisant face à l'ouverture de boîtier (20).

10. Dispositif (1) selon l'une quelconque des revendications précédentes, **caractérisé en ce que** le boîtier (19) est fixé à une face inférieure (10) de l'unité de bobine (9) opposée à la voie de circulation (7).

11. Dispositif (1) selon l'une quelconque des revendications précédentes, **caractérisé en ce que** la paroi de gaine (5) présente à son extrémité supérieure une saillie (8) périphérique dirigée vers l'espace intérieur (6).

12. Dispositif (1) selon l'une quelconque des revendications précédentes, **caractérisé en ce qu'**un côté de voie de circulation (11) de l'unité de bobine (9) et l'extrémité supérieure de la paroi de gaine (5) se terminent en affleurement l'un l'autre.
